# EUROPÄISCHE PATENTANMELDUNG

(11) **EP 4 391 308 A1**
(43) Veröffentlichungstag der Anmeldung: **26.06.2024**
(21) Anmeldenummer: 22215248.0
(22) Anmeldetag: 21.12.2022
(51) Int. Cl.: H02K 1/14, H02K 15/02, H02K 15/06

(54) **VERFAHREN ZUM HERSTELLEN EINES STATORS FÜR EINEN ELEKTROMOTOR**

(71) Anmelder: maxon international ag, 6072 Sachseln (CH)
(72) Erfinder: Marqueyrol, Thibaut, 1712 Tafers (CH); Wandeler, Marco, 6018 Buttisholz (CH)
(74) Vertreter: Grünecker Patent- und Rechtsanwälte PartG mbB

(57) **Zusammenfassung**

Die vorliegende Erfindung betrifft ein Verfahren zum Herstellen eines Stators für einen Elektromotor mit einem Jochring und einem Polsternring mit mehreren Statorzähnen zum Anordnen von Wicklungen, bevorzugt Wicklungspaketen, wobei der Polsternring in dem Jochring aufnehmbar ist, mit dem Einsetzen des Polsternrings in den Jochring, wobei die Statorzähne dem Jochring zugewandt sind, und mit dem Aufspreizen des Polsternrings, wodurch die Statorzähne gegen den Jochring gedrückt werden. Des Weiteren betrifft die Erfindung einen solchen Stator für einen Elektromotor mit einem Jochring und einem in dem Jochring aufnehmbaren Polsternring mit mehreren Statorzähnen zum Anordnen von Wicklungen und mit einer Öffnung zum Anordnen eines Rotors, wobei die Statorzähne des Polsternrings über dehnfähige, im montierten Zustand plastisch verformte Verbindungsstege miteinander verbunden sind.

## Beschreibung

Die vorliegende Erfindung betrifft ein Verfahren zum Herstellen eines Stators für einen Elektromotor mit einem Jochring und einem Polsternring mit mehreren Statorzähnen zum Anordnen von Wicklungen, bevorzugt Wicklungspaketen, wobei der Polsternring in den Jochring eingesetzt wird. Des Weiteren betrifft die Erfindung einen solchen Stator für einen Elektromotor mit einem Jochring und einem in dem Jochring aufnehmbaren Polsternring mit mehreren Statorzähnen zum Anordnen von Wicklungen und mit einer Öffnung zum Anordnen eines Rotors.

Ein herkömmlicher Elektromotor weist einen Stator auf, der ein feststehendes Motorbauteil bildet, sowie einen Rotor, der ein sich drehendes Motorbauteil bildet. Bei einem Innenläufer ist der Stator üblicherweise mit einem Statorjoch versehen, an dem sich radial nach innen ragende Statorzähne befinden. Die Statorzähne weisen an den dem Rotor zugewandten Enden Polschuhe auf und sind mit Wicklungen versehen, die im Betrieb ein elektromagnetisches Feld erzeugen. Zur Ausbildung und Verstärkung des elektromagnetischen Feldes ist das Statorjoch mit den Statorzähnen üblicherweise aus einem weichmagnetischen Material hergestellt, beispielsweise in Form von Blechpaketen.

Bei der Herstellung des Statorjochs ist ein Aufbringen der Wicklungen von der Außenseite durch den geschlossenen Jochring unmöglich, während von der Innenseite her die Polschuhe den Zugang zu den Statorzähnen erschweren. Bei einem einteiligen Statorjoch ist daher ein aufwändiges Wicklungsverfahren notwendig, um die Statorzähne mit den notwendigen Wicklungen zu versehen. Für die Herstellung von Statoren eines Elektromotors ist es daher bekannt, einen mehrteiligen Aufbau des Stators zu verwenden, wobei es sehr unterschiedliche Ausführungsformen gibt, beispielsweise aus C-förmigen Segmenten zusammengesetzte Statoren, Jochringe für Statoren mit den einzelnen daran zu befestigenden Statorzähnen, oder zweiteilige Statoren mit einem Polsternring und einem zylinderförmigen Jochring. Bei diesen mehrteiligen Statorkonzepten kann eine Wicklung jeweils problemlos direkt auf die Statorzähne aufgebracht werden.

Sowohl der Polsternring als auch der zylinderförmige Jochring eines zweiteiligen Stators werden üblicherweise aus mehreren einzelnen Blechelementen gefertigt, die in axialer Richtung übereinander angeordnet sind und durch Stanzpaketieren, Kleben, Schweißen, Backlackbeschichten oder anderen Stapelverfahren zu einem Blechstapel miteinander verbunden werden. Beispielsweise werden in der US 2002/0083572 A1 lose gepackte Statorbleche mittels eines Spreizdorns ausgerichtet und anschließend über ein Verschrauben in einem Motorgehäuse gesichert. Auf die frei zugänglichen Statorzähne des Polsternrings werden Wicklungen aufgewickelt oder als Wicklungspakete aufgeschoben. Im Anschluss an die Bestückung der von außen zugänglichen Polzähne mit den Wicklungen wird der Polsternring mittels Pressen oder Schrumpfung gefügt. Bei der Pressverbindung zwischen dem Polsternring und dem Jochring kann es durch herstellungsbedingte Toleranzen zu Luftspalte zwischen den Statorzähnen und dem Jochring, und dadurch zu magnetischen Verlusten im Stator, sowie zu Deformierungen der Statorzähne und entsprechend zum Ausschuss des Stators kommen.

Bei den im Stand der Technik bekannten zweiteiligen Statoren mit einem Polsternring und einem Jochring wird beim Zusammenfügen der Bauteile der Polsternring axial in den Jochring eingepresst. Durch den mechanischen Kontakt der Komponenten beim axialen Einpressen können sowohl Einkerbungen an den Komponenten als auch Späne entstehen, die den Betrieb des Elektromotors negativ beeinflussen. Weiter können sich Aufspaltungen in den Blechpaketen des Polsternrings und des Jochrings ergeben, wodurch die Bleche dann nicht mehr flächig aneinanderliegen, was zu magnetischen Verlusten im Stator führt. Darüber hinaus sind beim axialen Einpressen genaue Konturen und geringe Toleranzen des Polsternrings und des Jochrings erforderlich, um Luftspalte zwischen Statorzähnen und Jochring zu vermeiden oder einen gleichbleibenden Außendurchmesser des Jochrings sicherzustellen.

Aus der DE 10 2015 000 769 A1 ist beispielsweise ein Stator für einen Elektromotor mit einer kraft- oder reibschlüssigen Pressverbindung zwischen den Statorzähnen eines Polsternrings und einem Jochring bekannt, wobei der Jochring auf den Polsternring axial eingepresst wird und zusätzlich eine stoffschlüssige Verbindung über einen mikroverkapselten Klebstoff erzeugt wird. In der DE 10 2016 201 967 A1 wird für eine prozesssichere Fertigung eines Stators eine tangentiale Pressverbindung zwischen den Statorzähnen eines Polsternrings und einem Jochring beschrieben, wobei die Statorzähne mit einer schlitzförmigen, federnden Ausnehmung ausgestaltet sind und in axialen Nuten des Jochrings eingesetzt werden, um über tangentiale Kräfte eine Presspassung zum Jochring zu erreichen.

Es ist daher die Aufgabe der vorliegenden Erfindung, ein verbessertes Verfahren zum Herstellen eines Stators für einen Elektromotor bereitzustellen, mit dem die Herstellung und die Montage von Polsternring und Jochring vereinfacht wird, bei einem gleichzeitig geringeren Ausschuss und einer funktionssicheren Qualität des Stators.

Die der Erfindung zugrundeliegende Aufgabe wird bei einem Verfahren zum Herstellen eines Stators für einen Elektromotor gelöst durch das Bereitstellen eines Jochrings und eines Polsternrings mit mehreren Statorzähnen zum Anordnen von Wicklungen, bevorzugt Wicklungspaketen, wobei der Polsternring in dem Jochring aufnehmbar ist, durch das Einsetzen des Polsternrings in den Jochring, wobei die Statorzähne dem Jochring zugewandt sind, und das Aufspreizen des Polsternrings, wodurch die Statorzähne gegen den Jochring gedrückt werden. Dieses Verfahren ermöglicht eine sichere und spanfreie Anordnung des Polsternrings im Jochring. Sinnvollerweise werden vor dem Einsetzen des Polsternrings Wicklungen auf den Statorzähnen angeordnet, wobei einzelne vorgefertigte Wicklungspakete von außen auf die Statorzähne geschoben werden können. Zur Bildung des Polsternrings sind die einzelnen Statorzähne im Bereich der innen liegenden Polschuhe miteinander verbunden, beispielsweise mit plastisch verformbaren Elementen, bevorzugt mit dehnfähigen Verbindungsstegen verbunden. Beim Einsetzen des Polsternrings in den Jochring werden die Statorzähne ohne oder mit nur geringer mechanischer Belastung im Jochring angeordnet, sodass es weder zu Einkerbungen oder Spänen noch zu Aufspaltungen in den Blechpaketen der Statorzähne oder dem Jochring kommen kann. Die den Polschuhen abgewandten Enden der Statorzähne sind dann in radialer Richtung der Innenumfangsfläche des Jochrings zugewandt. Zweckmäßigerweise wird der Jochring vor dem Aufspreizen des darin angeordneten Polsternrings in einen starkwandigen Stützring gelegt, damit der Jochring durch die radiale Presskraft beim Aufspreizen nicht aufgeweitet oder verformt wird. Durch die Krafteinwirkung in radialer Richtung auf die Statorzähne werden die freien Enden der Statorzähne gegen den Jochring gepresst, sodass es zu einem Presssitz zwischen dem Polsternring und dem Jochring kommt. Die verformbaren Elemente zwischen den Statorzähnen werden beim Aufspreizen des Polsternrings gedehnt, gestreckt oder gebogen.

Eine günstige Ausführungsform sieht vor, dass der Polsternring eine Öffnung mit einem Innendurchmesser zum Anordnen eines Rotors aufweist und das Aufspreizen des Polsternrings den Innendurchmesser der Öffnung aufweitet. Diese mittig angeordnete Öffnung des Polsternrings ermöglicht eine sichere und einfache radiale Krafteinwirkung zum Aufspreizen des Polsternrings, wobei der finale Innendurchmesser zum Anordnen des Rotors in dem fertig montierten Stator sich erst nach dem Aufspreizen des Polsternrings ergibt. Dabei ist für einen fehlerfreien und effizienten Elektromotor ein gleichmäßiger Abstand der Statorzähne bzw. der Polschuhe zum Rotor notwendig, weshalb alle Statorzähne möglichst gleichmäßig an den Jochring eingepresst werden.

Eine vorteilhafte Ausgestaltung sieht vor, dass der Jochring auf einer Innenumfangsfläche mehrere Aussparungen zum Aufnehmen der Statorzähne des Polsternrings aufweist und beim Aufspreizen des Polsternrings die Statorzähne in die Aussparungen eingepresst werden. Dies ermöglicht eine dauerhafte Fixierung der Enden der Statorzähne an der Innenumfangsfläche des Jochrings mittels einer tangentialen Haltekraft. Dabei können die Aussparungen an der Innenumfangsfläche als axiale Nuten ausgebildet sein, wobei radial tiefere Nuten und kleine verbleibende Restspalte zwischen dem Jochring und den Statorzähnen eine geringere Streuung des Rastmomentes zwischen den einzelnen Zähnen und dem Jochring ermöglichen. Das Vorsehen von Aussparungen und das Einpressen der Statorzähne in die Aussparungen erlaubt weiter die genaue Positionierung der Statorzähne im Stator und damit eine Effizienzsteigerung des Elektromotors.

Eine Modifikation des Verfahrens sieht vor, dass ein Spreizwerkzeug, bevorzugt ein Spreizwerkzeug mit einem keilförmigen Spreizelement in den Polsternring eingeführt wird, um den Polsternring aufzuspreizen. Bevorzugt wird das Spreizwerkzeug nach dem Einsetzen des Polsternrings in den Jochring in den Polsternring eingeführt. Der Einsatz eines geeigneten Spreizwerkzeugs ermöglicht ein gleichmäßiges Aufspreizen des Polsternrings und damit auch eine gute und gleichmäßige Verbindung der Vielzahl der Statorzähne zu dem Jochring. Eine praktische Ausführung sieht vor, dass das Spreizwerkzeug in axialer Richtung in die Rotoröffnung des Polsternrings eingeführt wird und sich dort gleichmäßig in radialer Richtung ausdehnt, um über eine radiale Krafteinwirkung den Polsternring gleichmäßig aufzuspreizen.

In einer besonderen Variante weist das Spreizwerkzeug mehrere radial bewegbare Streben auf, bevorzugt für jeden Statorzahn eine dem Statorzahn zugeordnete Strebe, wobei die Streben radial nach außen gedrückt werden, um den Polsternring aufzuspreizen. Über die mittig auf den Statorzahn drückende Strebe wird die radiale Krafteinwirkung des Spreizwerkzeugs direkt auf den einzelnen Statorzahn ausgeübt. Bei einer gleichzeitigen und gleichmäßigen radialen Krafteinwirkung auf alle Statorzähne des Polsternrings ergibt sich entsprechend auch ein gleichmäßiger Anpressdruck aller Statorzähne gegen den Jochring.

Eine alternative Verfahrensvariante sieht vor, dass in den Zwischenräumen zwischen den einzelnen Statorzähnen zur Bildung des Polsternrings ein oder mehrere nach innen vorstehende Verbindungsstege vorgesehen sind und das Spreizwerkzeug mehrere radial bewegbare Streben aufweist, bevorzugt für jeden Zwischenraum zwischen den einzelnen Statorzähnen eine dem Zwischenraum zugeordnete Strebe, wobei die Streben radial nach außen gedrückt werden, um die Verbindungsstege geradezurichten und dadurch den Polsternring aufzuspreizen. In den Zwischenräumen zwischen den einzelnen Statorzähnen können jeweils ein oder mehrere Verbindungsstege, bevorzugt gebogene Verbindungsstege, vorgesehen sein, wobei die radial bewegbaren Streben des Spreizwerkzeugs im Wesentlichen an allen Verbindungsstegen eines Zwischenraums anliegen und diese nach außen drücken. Beim Aufspreizen des Polsternrings sind die Streben des Spreizwerkzeugs im Wesentlichen mittig zwischen den Statorzähnen positioniert, um möglichst gleichmäßig auf die jeweiligen Verbindungsstege zu drücken. Durch das Biegen der Verbindungsstege bzw. das Geraderichten der vorher gebogenen Verbindungsstege wird die magnetische Leitfähigkeit des Materials der Verbindungsstege reduziert, da dieses nach dem Biegevorgang schneller in die Sättigung gerät. Die Reduktion der magnetischen Leitfähigkeit an den Verbindungsstegen der einzelnen Statorzähne des Polsternrings ist im Betrieb des Elektromotors vorteilhaft, da die Stege zwischen den einzelnen Statorzähnen einen unerwünschten magnetischen Kurzschluss bilden.

In einer vorteilhaften Verfahrensvariante werden die Verbindungstege nach dem Aufspreizen des Polsternrings, insbesondere mittels Schneiden oder Verdampfen mit einem Laserstrahl unter Wasser, entfernt. Dadurch wird der magnetische Kurzschluss zwischen den Statorzähnen unterbunden, wodurch ein höheres Drehmoment ermöglicht wird. Infolge der Nähe zum Wicklungspaket ist das Entfernen der Verbindungsstege nur eingeschränkt durch Stanzen oder mechanisches Schneiden möglich.

Eine nützliche Ausführung sieht vor, dass das Spreizwerkzeug einen axial bewegbaren Arbeitskeil und die Streben des Spreizwerkzeugs keilförmige Aufdrückflächen aufweisen. Der in axialer Richtung zur Rotoröffnung bewegbare sich konisch erweiternde Arbeitskeil ermöglicht über die keilförmigen Aufdrückflächen der Streben eine gleichmäßige radiale Krafteinwirkung auf die Statorzähne oder die Verbindungsstege des Polsternrings, sodass die Statorzähne von dem axial bewegbaren Arbeitskeil gleichmäßig nach außen und gegen den Jochring gedrückt werden.

Des Weiteren betrifft die vorliegende Erfindung einen Stator für einen Elektromotor mit einem Jochring, bevorzugt einem zylinderförmigen Jochring, einem in dem Jochring aufnehmbaren Polsternring mit mehreren Statorzähnen und einer Rotoröffnung sowie Wicklungen, bevorzugt Wicklungspaketen, die auf den Statorzähnen angeordnet sind. Erfindungsgemäß sind die Statorzähne des Polsternrings über dehnfähige Verbindungsstege miteinander verbunden, wobei die Verbindungsstege im montierten Zustand gegenüber dem ursprünglichen Zustand des Stators plastisch verformt und die Statorzähne gegenüber dem ursprünglichen Zustand gegen den Jochring gedrückt sind. Im ursprünglichen Zustand oder Vormontagezustand liegt der Stator unmontiert in miteinander unbefestigten Einzelteilen vor. Dies ermöglicht eine präzise Ausrichtung und sichere Anordnung der Statorzähne am Jochring, wobei die Statorzähne bzw. die Polschuhe nach innen den gleichen Radius bzw. den gleichen Abstand zur Rotorachse aufweisen, damit später im Elektromotor ein möglichst gleichmäßiger Luftspalt zum Rotor gewährleistet werden kann. Dies verbessert nicht nur den Wirkungsgrad des Elektromotors durch die genaue Positionierung der Statorzähne im Jochring, sondern verringert auch den Ausschuss der Produktion und die Fehleranfälligkeit des Elektromotors durch die Vermeidung von Spänen, Deformierungen und Aufspaltungen der Blechpakete bei der Herstellung des Stators. Die dehnfähigen Verbindungsstege, insbesondere plastisch verformbare Verbindungsstege, deren Verformung nach einer radialen Krafteinwirkung nicht oder nicht vollständig reversibel ist, zwischen den einzelnen Statorzähnen eines Polsternrings ermöglichen eine schnelle und einfache Positionierung des Polsternrings im Jochring vor einer radialen Krafteinwirkung und ein gleichmäßiges Aufspreizen des Polsternrings und Andrücken der Statorzähne gegen den Jochring durch die radiale Krafteinleitung. Dies ermöglicht eine sichere und schnelle und damit kostengünstige Produktion eines Stators bei einem permanenten Presssitz der Statorzähne gegen die Innenumfangsfläche des Jochrings. Die Verbindungsstege ermöglichen hier zusätzlich einen magnetischen Kurzschluss zwischen den Statorzähnen, durch welchen je nach Verschaltung, Polpaar- und Zähnezahl des Elektromotors ein vorhandenes Momentenrippel verringert werden kann.

Für eine gute magnetische Leitfähigkeit des Stators kann der Polsternring als ein Blechstapel aus mehreren Statorblechen ausgebildet sein, wobei einzelne Statorbleche als Blechringe ausgebildet sind, die sich über alle Statorzähne des Polsternrings erstrecken und zwischen den Statorzähnen dehnfähige Verbindungsstege ausbilden. Dies ermöglicht neben einer guten magnetischen Leitfähigkeit der Statorzähne auch eine einfache Ausbildung der dehnfähigen Verbindungsstege. Die Statorbleche können sowohl als Blechzuschnitte als auch als ausgestanzte Blechringe ausgeführt sein und durch Stanzpaketieren, Kleben, Schweißen, Backlackbeschichtung oder Ähnlichem zu einem Blechstapel verbunden sein. Dabei können mindestens drei Statorbleche des Polsternrings als Blechringe ausgebildet sein, wobei die Blechringe bevorzugt gleichmäßig über die Dicke des Blechstapels verteilt sind. Beispielsweise kann jedes fünfte, zehnte oder zwanzigste Statorblech des Blechstapels als Blechring ausgebildet sein, um eine entsprechend funktional sichere Ausgestaltung des Polsternrings zu ermöglichen. In einer alternativen Form können auch alle Statorbleche des Blechstapels mit einem dünnen Verbindungssteg ausgeführt sein, wodurch nach dem Aufspreizen des Polsternrings und einem Anpressen der Statorzähne an den Jochring ein Abschluss des Stators in Richtung der Rotoröffnung entsteht und alle Wicklungs-Hohlräume zwischen dem geschlossenen Polsternring und dem Jochring vergossen werden können, ohne dass eine zusätzliche Abdichtung nach innen erforderlich ist.

Günstigerweise können die dehnfähigen Verbindungsstege als gebogene Verbindungsstege ausgebildet sein, bevorzugt mit einer Biegung in radialer Richtung. Dies ermöglicht sowohl die einfache Bereitstellung einer ausreichenden Dehnfähigkeit zum Aufspreizen des Polsternrings, als auch eine plastische Verformbarkeit, um beim Einsetzen in den Jochring eine ausreichende Stabilität des Polsternrings und nach dem Aufspreizen ein Andrücken der Statorzähne am Jochring zu gewährleisten. Üblicherweise sind hierfür die gebogenen Verbindungsstege zwischen den Statorzähnen an den inneren Enden der Statorzähne bzw. den Polschuhen positioniert und weisen eine nach außen gewölbte Biegung auf.

In einer alternativen Form können die dehnfähigen Verbindungsstege auch als in radialer Richtung gebogene und zur Öffnung gewölbte Verbindungsstege ausgebildet sein, wobei diese nach innen gewölbten Verbindungsstege in einem Vormontagezustand insbesondere in die mittige Öffnung des Polsternrings hineinragen. Diese nach innen gewölbten Verbindungsstege werden beim Aufspreizen direkt von den Streben des Spreizwerkzeugs gestreckt oder geradegerichtet, wodurch sich die magnetische Leitfähigkeit der Verbindungsstege signifikant reduziert.

Bevorzugt weisen die Verbindungsstege eine Bruchkerbe auf. Die Bruchkerbe kann insbesondere herausgestanzt worden sein. Durch die Dehn- oder Biegespannung beim Aufspreizen können die Verbindungstege während des Spreizhubs brechen. Der radiale Spreizhub des Spreizwerkzeugs kann hierzu vergrößert werden. Durch den Bruch der Verbindungsstege wird die magnetische Verbindung bzw. ein magnetischer Kurschluss zwischen den Statorzähnen unterbunden und ein mögliches Drehmoment erhöht.

Eine sinnvolle Ausführungsform sieht vor, dass der Jochring eine Vielzahl von auf der Innenumfangsfläche verteilten Aussparungen zur Aufnahme der radialen Enden der Statorzähne aufweist. Das Vorsehen von im Wesentlichen gleichmäßig verteilten Aussparungen erlaubt eine gleichmäßige Anordnung und exaktere Positionierung der Statorzähne bei der Herstellung des Stators. Insbesondere können diese, an der Innenumfangsfläche des Jochrings verteilten Aussparungen, als in axialer Richtung verlaufende Nuten ausgebildet sein. Der Jochring ist dabei bevorzugt zylinderförmig ausgeführt. Die seitlichen Ränder der Nuten ermöglichen eine exaktere Positionierung der Statorzähne, wobei gleichzeitig ein tangentialer Presssitz zwischen den Rändern der Nuten und den radialen Enden der Statorzähne ermöglicht wird, dessen Wirkung sich mit der Tiefe der Nuten verbessert. Dabei können auch die radialen Enden der Statorzähne rechteckförmig ausgebildet sein, um sicher durch den tangentialen Presssitz in den Nuten gehalten zu werden und so sicher mit dem Jochring verbunden zu sein. Der Presssitz an den Rändern der in axialer Richtung verlaufenden Nuten ermöglicht nicht nur eine tangentiale Krafteinleitung auf die Statorzähne, sondern auch eine exakte Ausrichtung der Statorzähne in Richtung der Rotorachse. Die dehnfähigen Verbindungsstege dienen in dieser Ausführung lediglich zur Positionierung der Statorzähne gegenüber dem Jochring beim Einsetzen und Aufspreizen des Polsternrings. Wenn die Statorzähne sicher in den Nuten auf der Innenumfangsfläche des Jochring eingepresst sind, können die dehnfähigen Verbindungsstege zwischen den einzelnen Statorzähnen im Anschluss an das Aufspreizen des Polsternrings entfernt werden, da die Statorzähne durch den tangentialen Presssitz sicher in den Nuten positioniert und mit dem Jochring verbunden sind. Bei dieser vorteilhaften Ausführung ist der magnetische Kurzschluss zwischen den Statorzähnen aufgehoben, was ein höheres Drehmoment ermöglicht. Das Entfernen der Verbindungsstege kann bevorzugt mittels Schneiden oder Verdampfen mit einem Laserstrahl unter Wasser durchgeführt werden. Infolge der Nähe zum Wicklungspaket ist das Entfernen der Verbindungsstege nur eingeschränkt durch Stanzen oder mechanisches Schneiden möglich.

Nachfolgend werden nicht einschränkende Ausführungsformen der vorliegenden Erfindung anhand von beispielhaften Zeichnungen näher erläutert. Es zeigen:
- Figur 1: eine perspektivische Ansicht auf einen Polsternring für einen erfindungsgemäßen Stator,
- Figur 2: eine perspektivische Ansicht auf den Polsternring aus Figur 1 und auf mehrere einzelne Wicklungspakete,
- Figur 3: eine perspektivische Ansicht auf den Polsternring aus den Figuren 1 und 2 mit aufgeschobenen Wicklungspaketen,
- Figur 4: eine perspektivische Ansicht auf den Polsternring mit aufgesteckten Wicklungspaketen aus Figur 3 und einem Jochring,
- Figur 5: eine perspektivische Ansicht auf den Jochring aus Figur 4 mit eingesetztem Polsternring,
- Figur 6: eine perspektivische Ansicht auf einen erfindungsgemäßen Stator mit dem Jochring aus den Figuren 4 und 5 sowie dem aufgespreizten und eingepressten Polsternring aus Figur 3,
- Figur 6a: eine vergrößerte Teilschnittansicht des Stators aus Figur 6 mit einem schematisch dargestellten Spreizwerkzeug,
- Figur 7: eine Schnittansicht des Stators aus Figur 6 ohne Wicklungspakete und mit schematisch dargestelltem Spreizwerkzeug,
- Figur 7a: eine Schnittansicht des Stators aus Figur 7 ohne Wicklungspakete und ohne Spreizwerkzeug,
- Figur 8: eine perspektivische Schnittansicht durch den Stator aus Figur 6 mit einem darin aufgenommenen Spreizwerkzeug,
- Figur 8a: eine Schnittansicht durch den Stator und das Spreizwerkzeug aus Figur 8, und
- Figur 9: eine vergrößerte Teilschnittansicht einer weiteren Ausführungsform eines erfindungsgemäßen Stators mit einem schematisch dargestellten Spreizwerkzeug.

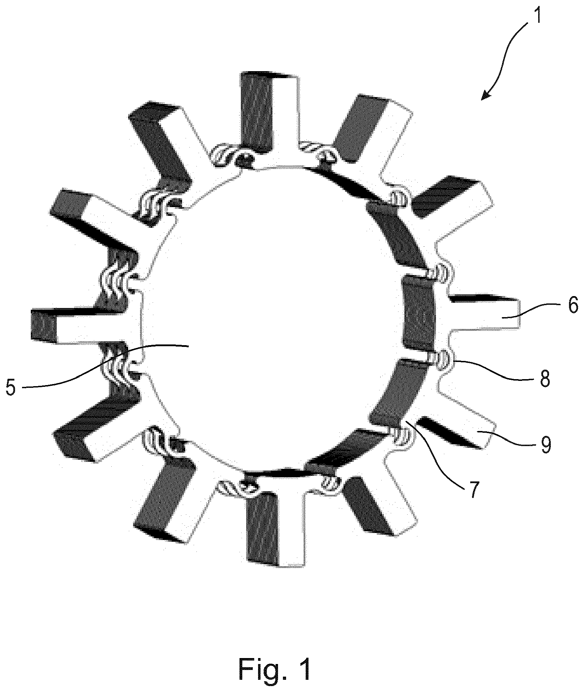

In Figur 1 ist eine perspektivische Ansicht auf einen Polsternring 1 zu sehen, der zusammen mit einem Jochring 2 und Wicklungspaketen 3 einen erfindungsgemäßen Stator 4 ausbildet. Der sternförmige Polsternring 1 ist in der dargestellten Ausführungsform als ein Blechpaket aus mehreren Lagen von Statorblechen hergestellt, die unter Bildung einer zentralen, zylindrischen Öffnung 5 in axialer Richtung übereinander geschichtet und miteinander verbunden sind, beispielsweise miteinander verprägt sind. In der Öffnung 5 ist in einem montierten Zustand des Stators 4 der Rotor des Elektromotors aufgenommen und in axialer Richtung drehbar. Der sternförmige Polsternring 1 umfasst mehrere sich radial nach außen erstreckende Statorzähne 6, die auf der radial zur zylindrischen Öffnung 5 gelegenen Innenseite Polschuhe 7 ausbilden, die im montierten Zustand dem Rotor des Elektromotors zugewandt sind. Zum Positionieren der Statorzähne 6 im Polsternring 1 und zum Ausbilden des geschlossenen Rings des Polsternrings 1 um die Öffnung 5 sind die Statorzähne 6 im Bereich der Polschuhe 7 über dehnfähige Verbindungsstege 8 miteinander verbunden. In der in Figur 1 gezeigten Ausführungsform des Polsternrings 1 sind die Verbindungsstege 8 als radial nach außen gebogene Stege ausgebildet, die von einzelnen Statorblechen des als Blechpakets ausgebildeten Polsternrings 1 ausgebildet werden. In der gezeigten Ausführungsform sind nur einzelne Bleche mit Verbindungsstegen 8 ausgeführt, beispielsweise weist nur jedes fünfte, zehnte oder zwanzigste Blech Verbindungsstege 8 auf. Dabei sind die Verbindungsstege 8 üblicherweise gleichmäßig über die Dicke der Statorzähne 8 in axialer Richtung verteilt.

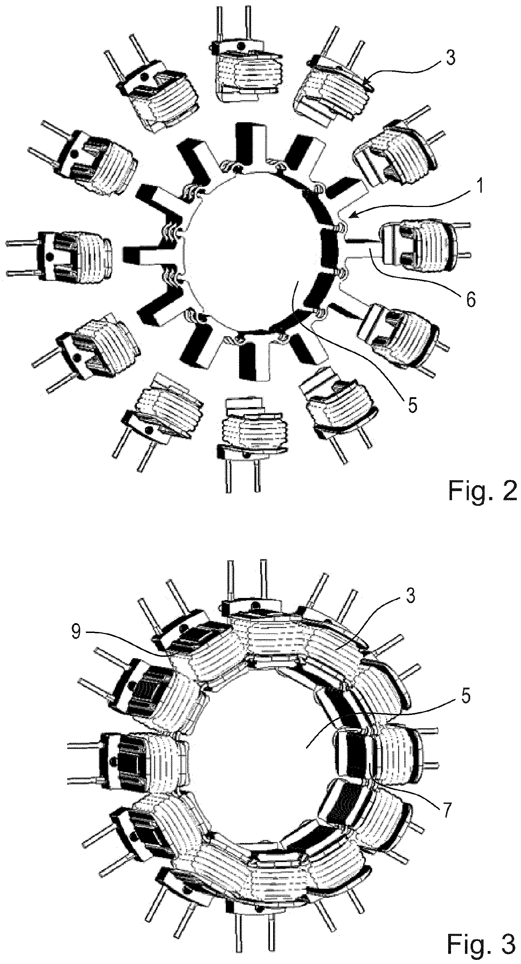

Auf die in radialer Richtung nach außen vorstehenden Statorzähne 6 werden, wie in Figur 2 und 3 gezeigt, einzelne vorgefertigte Wicklungspakete 3 aufgeschoben, wobei jeder Statorzahn 6 mit einem Wicklungspaket 3 versehen wird, siehe Figur 2. Wie in der perspektivischen Ansicht des Polsternrings 1 in Figur 3 zu erkennen, werden die Wicklungspakete 3 vollständig bis zum Polschuh 7 auf die Statorzähne 6 aufgeschoben, sodass die radial nach außen vorstehenden Enden 9 der Statorzähne 6 leicht gegenüber den Wicklungspaketen 3 vorstehen.

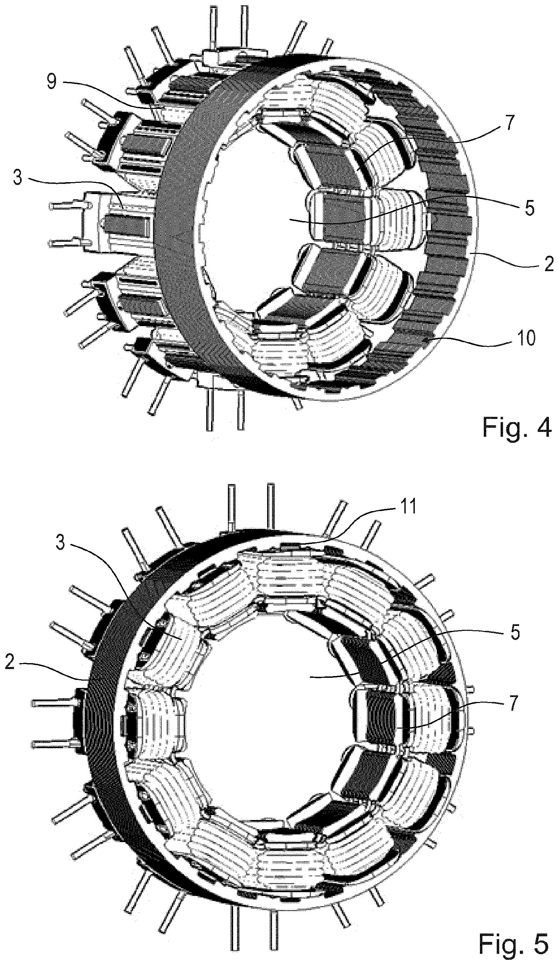

Die perspektivische Ansicht in Figur 4 zeigt neben dem Polsternring 1 mit den auf den Statorzähnen 6 aufgeschobenen Wicklungspaketen 3 auch den Jochring 2 in einer Montageposition. Der Jochring 2 weist am Innenumfang Aussparungen 10 zur Positionierung der Statorzähne 6 auf, die in dieser Ausführungsform als in axialer Richtung verlaufende Nuten 19 ausgebildet sind. In der hier gezeigten Montagestellung ist jedes radial vorstehende Ende 9 der Statorzähne 6 mit einer sich in axialer Richtung erstreckenden Nut 19 am Innenumfang des Jochrings 2 ausgerichtet. Wie der Polsternring 1 kann auch der Jochring 2 als ein Blechpaket aus in Lagen übereinander gestapelten Statorblechen hergestellt sein. Wie in Figur 5 zu sehen, wird der Jochring 2 bei der Montage in axialer Richtung auf den Polsternring 1 aufgeschoben, wobei die vorstehenden Enden 6 der Statorzähne 6 durch die Nuten 19 am Innenumfang des Jochrings 2 lediglich geführt werden, sodass an den Nuten 19 und den vorstehenden Enden 9 keine Späne oder Einkerbungen entstehen können. Zwischen den vorstehenden Enden 9 und dem Nutboden 20 der Nuten 19 verbleibt dabei ein Spalt 11.

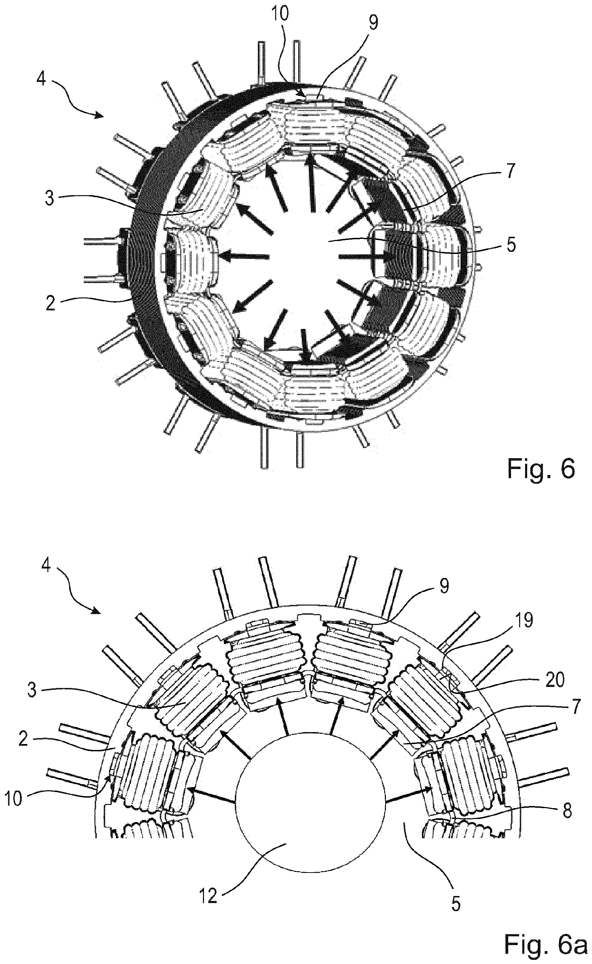

Nach der Positionierung des Polsternrings 1 im Jochring 2 wird von der Öffnung 5 aus eine in radialer Richtung wirkende Kraft auf jeden Statorzahn 6 bzw. jeden Polschuh 7 der Statorzähne 6 ausgeübt, sodass die vorstehenden Enden 9 der Statorzähne 6 in die Aussparungen 10 eingepresst werden. Wie in Figur 6 zu erkennen, liegen die vorstehenden Enden 9 der Statorzähne 6 anschließend am Boden 20 der Nuten 19 an, sodass der zunächst vorhandene Spalt 11 durch die vorstehenden Enden 9 im Wesentlichen ausgefüllt wird.

Beim radialen Aufspreizen des Polsternrings 1 und dem damit verbundenen Einpressen der vorstehenden Enden 9 in die Aussparungen 10 des Jochrings 2 weitet sich die Öffnung 5 auf und der Abstand zwischen den einzelnen Statorzähnen 6 vergrößert sich. Durch den sich vergrößernden Abstand zwischen den Statorzähnen 6 werden die dehnfähigen Verbindungsstege 8 zwischen den Statorzähnen 6 beim radialen Aufspreizen des Polsternrings 1 gestreckt, sodass sich die Biegung der Verbindungsstege 8 abflacht. Da die Verbindungsstege 8 in dieser Ausführungsform durch die Statorbleche des Blechpakets des Polsternrings 1 ausgebildet sind, erfolgt der größte Teil der Streckung der Verbindungsstege 8 als plastische Verformung. Dies ist auch in der vergrößerten Teilschnittansicht mit dem aufgespreizten Polsternring 1 und den in die Nuten 19 des Jochrings 2 eingepressten Statorzähnen 6 in Figur 6a zu erkennen. Durch das hier nur schematisch dargestellte Spreizwerkzeug 12 wird eine radiale Kraft auf die Statorzähne 6 aufgebracht, sodass die vorstehenden Enden 9 der Statorzähne 6 fest in die Nuten 19 des Jochrings 2 eingepresst werden, wobei die Biegung der Verbindungsstege 8 sich abflacht, um den größeren Abstand zwischen den Statorzähnen 6 auszugleichen.

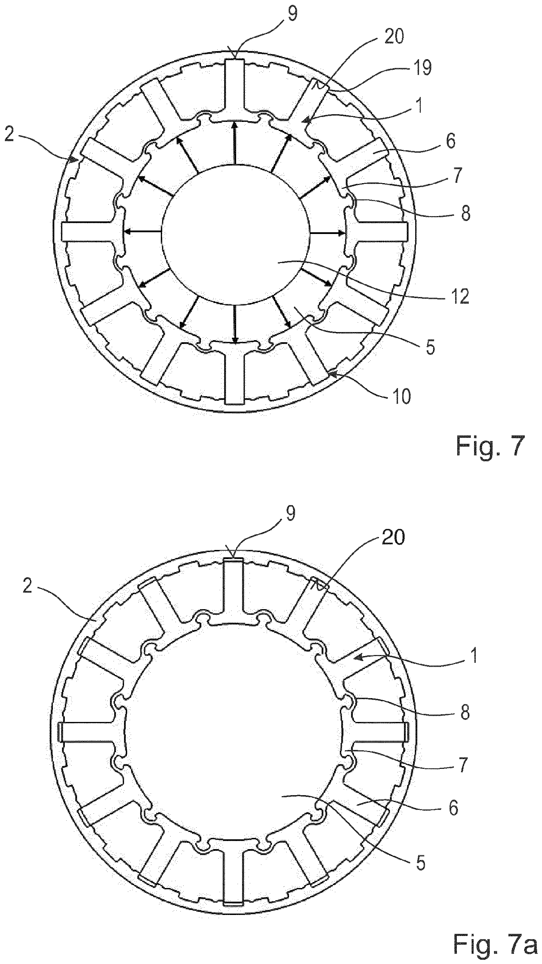

Der Presssitz zwischen den Statorzähnen 6 und dem Jochring 2 wird im Wesentlichen durch tangentiale Kräfte zwischen den Seitenwänden der Nuten 19 und dem vorstehenden Ende 9 der Statorzähne 6 erzeugt. Durch die dauerhafte Pressverbindung zwischen den Statorzähnen 6 und dem Jochring 2 ist nach dem Aufspreizen des Polsternrings 1 die Verbindung zwischen den einzelnen Statorzähnen 6 über die Verbindungsstege 8 nicht mehr erforderlich, weshalb die Verbindungsstege 8 nach dem Aufspreizvorgang auch entfernt werden könnten. Weiter werden durch den gleichmäßigen Aufspreizvorgang und das gleichmäßige Einpressen der Statorzähne 6 in den Jochring 2 alle Statorzähne 6 durch das Spreizwerkzeug 12 im Wesentlichen gleichmäßig und gleich weit nach außen gedrückt, sodass die Polschuhe 7 der Statorzähne 6 alle den gleichen Abstand zur axialen Achse aufweisen. Dies lässt sich besonders gut in den Schnittansichten des Stators 4 ohne Wicklungspakete 3 in den Figuren 7 und 7a erkennen.

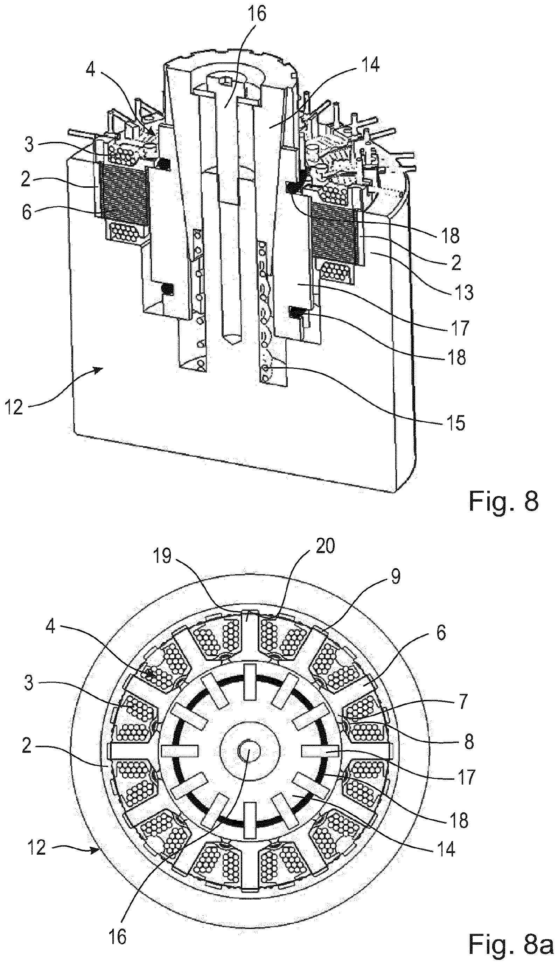

Figur 8 zeigt eine perspektivische Schnittansicht durch ein Spreizwerkzeug 12 mit einem darin angeordneten Stator 4. Das Spreizwerkzeug 12 weist einen starkwandigen Stützring 13 auf, an dem der Jochring 2 beim Aufspreiz- und Pressvorgang anliegt, damit der Jochring 2 nicht aufgeweitet oder verbogen wird. In dieser Schnittansicht ist auch der Aufbau der Statorzähne 6 bzw. des Polsternrings 1 aus einem Blechpaket aus in Lagen übereinander gestapelten Statorblechen zu erkennen. Das Spreizwerkzeug 12 weist einen in axialer Richtung bewegbaren Arbeitskeil 14 auf, wobei der Arbeitskeil 14 gegen die Vorspannkraft einer Feder 15 mittels eines mittig angeordneten Gewindebolzens 16 in axialer Richtung bewegt wird. Die konisch zulaufenden Flanken des Arbeitskeils 14 wirken auf mehrere radial bewegbare Streben 17, die über elastische Ringe 18 am Arbeitskeil 14 gehalten werden, siehe auch Figur 8a. Die über den Arbeitskeil 14 aufgeprägte Kraft in axialer Richtung wird über die geneigten Innenflanken der Streben 17 in eine radiale Kraft übertragen, die an den geraden Außenflanken der Streben 17 gleichmäßig auf die Statorzähne 6 wirkt und diese in die Aussparungen 10 am Jochring 2 einpresst.

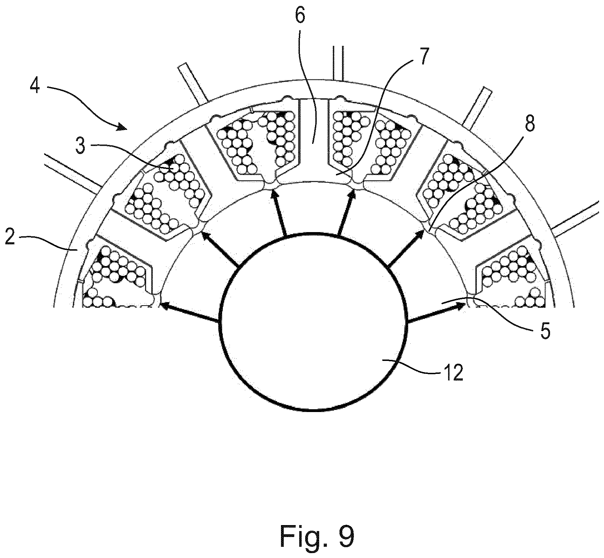

Eine weitere Ausführungsform eines erfindungsgemäßen Stators 4 und eines entsprechenden Verfahrens zur Herstellung zeigt Figur 9, in der eine vergrößerte Teilschnittansicht des Stators 4 und ein schematisch dargestelltes Spreizwerkzeug 12 gezeigt sind. Der Polsternring 1 dieses erfindungsgemäßen Stators 4 weist wieder eine Vielzahl von Statorzähnen 6 mit innen liegenden Polschuhen 7 und vorstehenden Enden 9 auf. Der Polsternring 1 ist in einem Jochring 2 angeordnet und jeder Statorzahn 6 des Polsternrings 1 ist mit einem vorher von außen aufgeschobenen Wicklungspaket 3 versehen. Die einzelnen Statorzähne 6 sind zum Ausbilden des Polsternrings 1 an den Kanten der Polschuhe 7 mit plastisch verformbaren Verbindungsstegen 8 versehen, wobei die Biegung der Verbindungsstege 8 gegenüber den Polschuhen 7 nach innen in die Öffnung 5 des Polsternrings 1 vorsteht. Das Spreizwerkzeug 12 erzeugt bei dieser Variante eine radiale Kraft, die auf die Verbindungsstege 8 zwischen den einzelnen Statorzähnen 6 wirkt und die Verbindungsstege 8 zum Aufspreizen des Polsternrings 1 geraderichtet. Dadurch werden die vorstehenden Enden 9 der Statorzähne 6 gegen die Innenumfangsfläche des Jochrings 2 gedrückt, um einen anhaltenden Presssitz des Polsternrings 1 bzw. der Statorzähne 6 am Jochring 2 zu erzeugen. Durch das Verbiegen der Verbindungsstege 8 wird die magnetische Leitfähigkeit der Verbindungsstege 8 reduziert, um die unerwünschten magnetische Kurzschlüsse zwischen den einzelnen Statorzähnen 6 zu verringern. Auch in dieser Ausführungsform können an der Innenumfangsfläche des zylinderförmigen Jochrings 2 Aussparungen 10 oder in axialer Richtung verlaufende Nuten 19 vorgesehen sein, um die Statorzähne 6 genau zu positionieren.

### Bezugszeichenliste

- 1: Polsternring
- 2: Jochring
- 3: Wicklungspakete
- 4: Stator
- 5: Öffnung
- 6: Statorzähne
- 7: Polschuh
- 8: Verbindungsstege
- 9: vorstehende Enden
- 10: Aussparungen
- 11: Spalt
- 12: Spreizwerkzeug
- 13: Stützring
- 14: Arbeitskeil
- 15: Feder
- 16: Gewindebolzen
- 17: Streben
- 18: elastische Ringe
- 19: Nuten
- 20: Nutboden

## Patentansprüche

1. Verfahren zum Herstellen eines Stators (4) für einen Elektromotor mit den Schritten:
- Bereitstellen eines Jochrings (2) und eines Polsternrings (1) mit mehreren Statorzähnen (6) zum Anordnen von Wicklungen, bevorzugt Wicklungspaketen (3), wobei der Polsternring (1) in dem Jochring (2) aufnehmbar ist;
- Einsetzen des Polsternrings (1) in den Jochring (2), wobei die Statorzähne (6) dem Jochring (2) zugewandt sind; und
- Aufspreizen des Polsternrings (1), wodurch die Statorzähne (6) gegen den Jochring (2) gedrückt werden.

2. Verfahren nach Anspruch 1, wobei der Polsternring (1) eine Öffnung (5) mit einem Innendurchmesser zum Anordnen eines Rotors aufweist und das Aufspreizen des Polsternrings (1) den Innendurchmesser der Öffnung (5) aufweitet.

3. Verfahren nach Anspruch 1 oder 2, wobei der Jochring (2) auf einer Innenumfangsfläche mehrere Aussparungen (10) zum Aufnehmen der Statorzähne (6) des Polsternrings (1) aufweist, und beim Aufspreizen des Polsternrings (1) die Statorzähne (6) in die Aussparungen (10) eingepresst werden.

4. Verfahren nach einem der Ansprüche 1 bis 3, wobei ein Spreizwerkzeug (12), bevorzugt ein Spreizwerkzeug mit einem keilförmigen Spreizelement (14), in den Polsternring (1) eingeführt wird, um den Polsternring (1) aufzuspreizen.

5. Verfahren nach Anspruch 4, wobei das Spreizwerkzeug (12) mehrere radial bewegbare Streben (17) aufweist, bevorzugt für jeden Statorzahn (6) eine dem Statorzahn (6) zugeordnete Strebe (17), und
die Streben (17) radial nach außen gedrückt werden, um den Polsternring (1) aufzuspreizen.

6. Verfahren nach Anspruch 4, wobei in den Zwischenräumen zwischen den einzelnen Statorzähnen (6) zur Bildung des Polsternrings (1) ein oder mehrere nach innen vorstehende Verbindungsstege (8) vorgesehen sind und das Spreizwerkzeug (12) mehrere radial bewegbare Streben (17) aufweist, bevorzugt für jeden Zwischenraum zwischen den einzelnen Statorzähnen (6) eine dem Zwischenraum zugeordnete Strebe (17), und
die Streben (17) radial nach außen gedrückt werden, um die Verbindungsstege (8) geradezurichten und dadurch den Polsternring (1) aufzuspreizen.

7. Verfahren nach Anspruch 6, wobei die Verbindungstege (8) nach dem Aufspreizen des Polsternrings (1), insbesondere mittels Schneiden oder Verdampfen mit einem Laserstrahl unter Wasser, entfernt werden.

8. Stator (4) für einen Elektromotor mit einem Jochring (2), bevorzugt einem zylinderförmigen Jochring (2), einem in dem Jochring (2) aufnehmbaren Polsternring (1) mit mehreren Statorzähnen (6) und einer Öffnung (5) zum Anordnen eines Rotors sowie Wicklungen, bevorzugt Wicklungspakete (3), die auf den Statorzähnen angeordnet sind,
**dadurch gekennzeichnet, dass** die Statorzähne (6) des Polsternrings (1) über dehnfähige Verbindungsstege (8) miteinander verbunden sind, wobei die Verbindungsstege (8) im montierten Zustand gegenüber einem ursprünglichen Zustand des Stators (4) plastisch verformt sind und die Statorzähne (6) gegenüber einem ursprünglichen Zustand gegen den Jochring (2) gedrückt sind.

9. Stator (4) für einen Elektromotor nach Anspruch 8,
**dadurch gekennzeichnet, dass** der Polsternring (1) als ein Blechstapel aus Statorblechen ausgebildet ist, wobei einzelne Statorbleche als Blechringe ausgebildet sind, die sich über alle Statorzähne (6) des Polsternrings (1) erstrecken und zwischen den Statorzähnen (6) die dehnfähigen Verbindungsstege (8) ausbilden.

10. Stator (4) für einen Elektromotor nach Anspruch 9,
**dadurch gekennzeichnet, dass** mindestens drei Statorbleche als Blechringe ausgebildet sind, wobei die Blechringe bevorzugt gleichmäßig über die Dicke des Blechstapels verteilt sind.

11. Stator (4) für einen Elektromotor nach einem der Ansprüche 8 bis 10,
**dadurch gekennzeichnet, dass** die dehnfähigen Verbindungsstege (8) als gebogene Verbindungsstege (8) ausgebildet sind, bevorzugt mit einer Biegung in radialer Richtung.

12. Stator (4) für einen Elektromotor nach Anspruch 11,
**dadurch gekennzeichnet, dass** die dehnfähigen Verbindungsstege (8) als in radialer Richtung gebogene und zur Öffnung (5) gewölbte Verbindungsstege (8) ausgebildet sind, wobei die Verbindungsstege (8) in einem Vormontagezustand insbesondere in die Öffnung (5) des Polsternrings (1) hineinragen.

13. Stator (4) für einen Elektromotor nach einem der Ansprüche 11 bis 12, **dadurch gekennzeichnet, dass** die Verbindungsstege (8) eine Bruchkerbe aufweisen.

14. Stator (4) für einen Elektromotor nach einem der Ansprüche 8 bis 13,
**dadurch gekennzeichnet, dass** der Jochring (2) eine Vielzahl von auf der Innenumfangsfläche verteilte Aussparungen (10) zur Aufnahme der radialen Enden (9) der Statorzähne (6) aufweist.

15. Stator (4) für einen Elektromotor nach Anspruch 14,
**dadurch gekennzeichnet, dass** die an der Innenumfangsfläche des Jochrings (2) verteilten Aussparungen (10) als in axialer Richtung verlaufende Nuten (19) ausgebildet sind.
